# EUROPEAN PATENT SPECIFICATION

(11) **EP 3 279 484 B1**
(45) Date of publication and mention of the grant of the patent: **23.09.2020**
(21) Application number: 17184391.5
(22) Date of filing: 02.08.2017
(51) Int. Cl.: F16B 25/00, F16B 25/10, F16B 35/06, F16C 11/06

(54) **SWIVEL HANGER SYSTEM**
SCHWENKBARES AUFHÄNGUNGSSYSTEM
SYSTÈME DE SUSPENSION PIVOTANT

(30) Priority: 04.08.2016 US 201615228509
(43) Date of publication of application: 07.02.2018
(73) Proprietor: Black & Decker Inc., New Britain, CT 06053 (US)
(72) Inventor: Armiento, Alan J., New York, 10801 (US)
(74) Representative: SBD IPAdmin

(56) References cited:
- WO-A1-2016/089761

## Description

This specification concerns a swivel hanger for hanging items from support surfaces.

WO2016/089761 A1 relates to a swivel hanger.

Fastening hardware is used to hang objects (for example, wall art, shelving structure, etc.) from support surfaces such as walls and ceilings of rooms. Fastening hardware that includes a swivel component is particularly useful, for example, to allow an object to be movably suspended from a support surface. There are many different types of swivel hangers, some including a number of components to facilitate a swivel connection between anchoring structure and an item to be supported by the swivel hanger. A swivel hanger having few components and that is easy to install would be useful for hanging household objects.

In an example arrangement, a swivel hanger system comprises an anchor member comprising a first end and a second end, an anchor head disposed at the second end of the anchor member and an elongated body disposed between the first and second ends of the anchor member, where the first end and at least a portion of the elongated body are configured to be inserted into a support member when the system is connected with the support member. The system also comprises a swivel member including a rounded first end and a second end, each of the first and second ends of the swivel member including an opening extending to a hollow interior of the swivel member, the opening at the rounded first end including a slotted configuration in order to rotatably couple with the anchor head such that the anchor head is located within the hollow interior and the elongated body extends through the opening at the first end of the swivel member. In an arrangement, in addition to the slotted opening in the rounded head, an additional rear access opening in the rounded head may be disposed opposite the slotted opening. The additional opening may accommodate an anchor member by passing a first end of the anchor member therethrough until (as already mentioned above) the anchor head is located within the hollow interior and the elongated body extends through the opening at the first end of the swivel member. An anchor member may be coupled with the swivel member by insertion through the second end of the swivel member or through the rear access opening opposite the slot. If the rear access opening is larger than the second opening, it may accommodate larger diameter anchor member heads than could normally be accommodated through the second opening of the swivel member. The system may further comprise a stop structure defined on at least one of the anchor member and the swivel member, where the stop structure limits an insertion distance at which the anchor member is inserted into the support member so as to maintain a selected distance between the rounded first end of the swivel member and a surface of the support member after insertion.

Embodiments of the invention will now be described by way of non-limiting example with reference to the accompanying drawings, in which:
FIGURE. 1 is a view in perspective and partial cross section of a swivel hanger system (not covered by the claims) being installed with a support surface in accordance with an example embodiment.
FIGURE 2 is a separated cross-sectional view of the swivel hanger system of FIG. 1 being installed with the support surface.
FIGURE 3 is an engaged cross-sectional view of the swivel hanger system of FIG. 1 being installed with the support surface.
FIGURE 4 is a cross-sectional view of the swivel hanger system of FIG. 1 connected with the support surface with the bit engaging the fastener.
FIGURE 5 is a cross-sectional view of the swivel hanger system of FIG. 1 connected with the support surface and hanging at a 90° angle in relation to the support surface.
FIGURE 6 is a cross-sectional view of the swivel hanger system of FIG. 1 connected with the support surface and hanging at a 45° angle in relation to the support surface.
FIGURE 7 is a view in perspective and partial cross section of a swivel hanger system (not covered by the claims) being installed within a support surface in accordance with another example embodiment.
FIGURE 8 is a separated cross-sectional view of the swivel hanger system of FIG. 7 being installed within the support surface.
FIGURE 9 is an engaged cross-sectional view of the swivel hanger system of FIG. 7 being installed within the support surface.
FIGURE 10 is a cross-sectional view of the swivel hanger system of FIG. 7 connected with the support surface with the tool in its forward most position.
FIGURE 11 is a cross-sectional view of the swivel hanger system of FIG. 7 connected with the support surface with the fastener in its forward most position.
FIGURE 12 is a cross-sectional view of the swivel hanger system of FIG. 7 connected with the support surface with the hanger supported at a 90° angle with respect to the surface.
FIGURE 13 is a cross-sectional view of the swivel hanger system of FIG. 7 connected with the support surface with the hanger supported at a 45° angle with respect to the surface.
FIGURE 14A is side perspective view of an alternate embodiment of the swivel hanger system.
FIGURE 14B is side perspective view of the embodiment of the swivel hanger system of FIGURE 14A.
FIGURE 14C shows a bottom perspective view of the embodiment of the swivel hanger system of FIGURE 14A.
FIGURE 15A shows a cross-sectional view of the embodiment of the swivel hanger of FIGURE 14A looking in the 15A-15A direction of FIGURE 14B.
FIGURE 15B shows across-sectional view of the embodiment of the swivel hanger of FIGURE 14A looking in the 15B-15B direction of FIGURE 14B.
FIGURE 16A shows a cross-sectional view of the embodiment of the swivel hanger system of FIGURE 14A looking in the 15B-15B direction of FIGURE 14B.
FIGURE 16B shows a cross-sectional view of the embodiment of the swivel hanger system of FIGURE 14A looking in the 15B-15B direction of FIGURE 14B.
FIGURE 16C shows a cross-sectional view of the embodiment of the swivel hanger system of FIGURE 14A looking in the 15A-15A direction of FIGURE 14B.
FIGURE 17 shows a cross-sectional view of the embodiment of the swivel hanger system of FIGURE 14A with alternate fastener installation approaches.

Like reference numerals have been used to identify like elements throughout this disclosure.

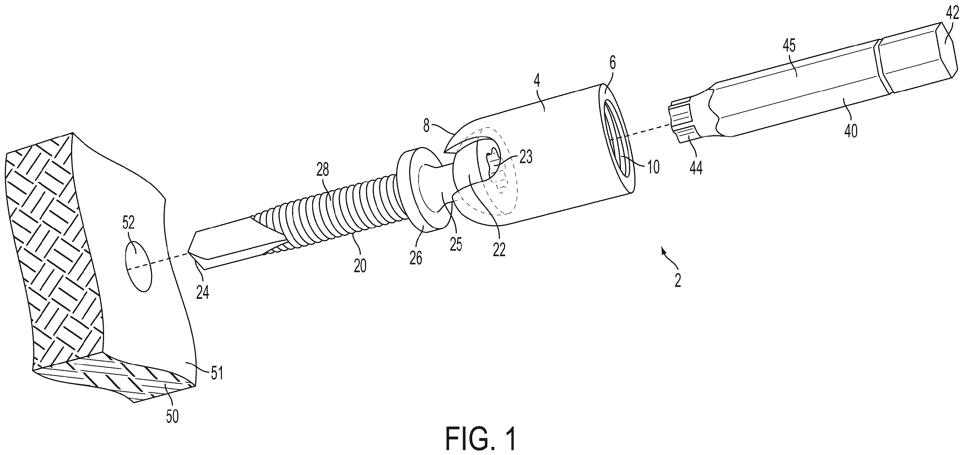

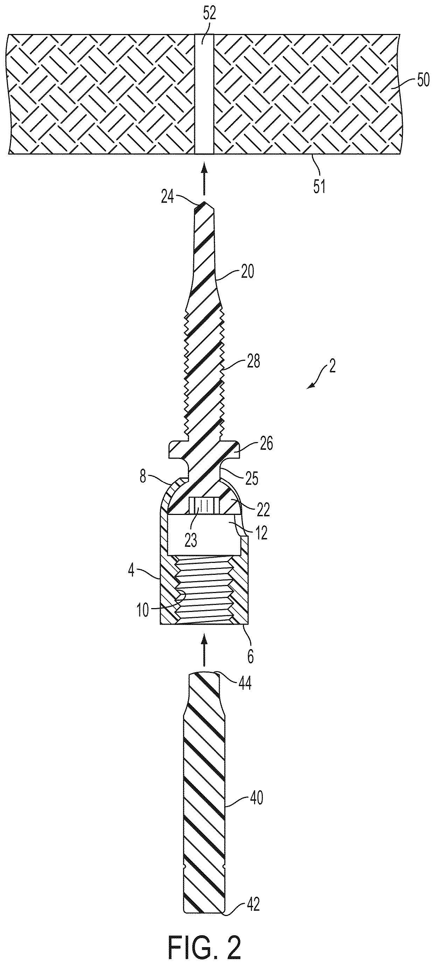

An example embodiment of a swivel hanger system is depicted in FIGS. 1 - 6. Referring to FIGS. 1 and 2, a swivel hanger system includes a swivel member **4** and an anchor member **20,** where the swivel member **4** is suitably dimensioned and configured to rotatably couple with the anchor member **20** during system use. As described herein, an anchoring tool **40,** which may or may not be part of the system **2,** is utilized to secure the anchor member **20** with swivel member **4** to a suitable support member **50.** The swivel member **4,** anchor member **20** and tool **40** can be constructed of any suitable and sufficiently rigid materials to facilitate installation and use of the anchor system, where some non-limiting examples of suitable materials include metal materials (for example, steels or steel alloys, such as stainless steel, carbon steel, etc.) and rigid plastic materials (for example, polyester resins).

The anchor member **20** of the system **2** includes a threaded elongated main body portion **28** that terminates at a pointed or lower first end **24** to facilitate engagement and anchoring of the main body portion **28** within an opening or bore **52** formed in a support member **50** by rotation or screwing of the main body portion **28** into the bore **52.** The anchor member **20** can further be configured to form the bore **52** within support member **50** as the anchor member **20** is moved toward and into the support member **50** during installation. In particular, the anchor member **20** is configured such that the pointed first end **24** pierces a support member **50** to create a pilot hole in the surface, where the threaded main body portion **28** is then rotated while force is applied to the anchor member **20** to force the anchor member into the support member **50,** thus forming the bore **52** (where the bore becomes threaded as the anchor member is rotated into the support member **50**). Alternatively, the bore **52** may be initially formed by a pilot hole (a hole formed in the support member **50** having a smaller diameter or cross-sectional dimension in relation to the diameter or cross-sectional dimension of the main body portion **28**).

The anchor member may be made of any suitable material including metal, plastic, etc. Furthermore, the different materials may be provided based on the most suitable properties for installation of the anchor into different types of support member surfaces (e.g., wood, concrete, metal, etc.

It is further noted that the body portion of the anchor member **20** can also be configured to secure to the support member **50** in any other suitable manner instead of utilizing a threaded surface for a screw-like anchoring engagement. For example, the body portion of the anchor member can instead have a smooth outer periphery that terminates at a point (for example, configured like a nail) to facilitate pounding of the anchor member (e.g., utilizing a hammer or other tool) into the bore **52.** Other alternative configurations of the body portion of the anchor member can also be implemented to suitably secure the body portion within the bore **52** of the support member **50.**

The main body portion **28** also includes an upper or second end **26** that opposes the lower or first end **24.** A flange is defined at the second end **26** (also referred to herein as the flange end **26**) that has a cross-sectional dimension that is greater than the cross-sectional dimension of the rest of the main body portion **28,** such that the flange end abuts a surface **51** of the support member **50** when the rest of the threaded main body portion **28** is secured within the bore **52.** An anchor head **22** extends from the flange end **26.** A column or pillar member **25** extends between the anchor head **22** from the flange end **26.** The pillar member **25** can have a cross-sectional dimension that is less than the cross-sectional dimension of each of the anchor head **22** and flange end **26** of the main body portion **28.**

The anchor head **22** includes a flat upper surface including a patterned or shaped depression or indentation **23.** For example, the patterned indentation **23** can be in the shape of a six pointed star as shown in the figures. However, the indentation can also have any other suitable pattern (for example, a linear or slotted indentation, a cross or X-shaped/Phillips type indentation, etc.). The underside of the anchor head **22** extending from its flat upper surface to the pillar member **25** has a curved configuration that is generally hemispherical in shape (i.e., has the general shape of a cut-in-half sphere).

The swivel member **4** is hollow and includes a rounded lower or first end **8** that has a contour generally conforming to the hemispherical underside of the anchor head **22** and further includes an opening that extends to the hollow interior of the swivel member. The swivel member **4** further includes a flat upper or second end **6** that includes an opening to the hollow interior of the swivel member. The lower or first end **8** of the swivel member **4** further includes a rotation slot or cut-out section **12** that extends from the opening at the first end **8** a selected distance along the lengthwise dimension of the swivel member **4.** The cut-out section **12** and opening at the first end **8** are both suitably dimensioned to receive the anchor head **22** of the anchor member **20** within the hollow interior of the swivel member **4** such that the swivel member is movably secured to the anchor member, where the swivel member **4** is free to pivot or swivel about the anchor head **22** (i.e., swivel movement refers to vertical and/or horizontal rotational movements) in various directions and at various angles of in relation to the anchor member **20.** The relationship between anchor head **22** and first end **8** of swivel member **4** can also be described as a ball and socket respectively, where first end **8** forms an interior socket. Receipt of tool **40** into anchor head **22** within the hollow interior at the first end **8** of the swivel member **4** can be made possible, for example, by first aligning the swivel member **4** such that its lengthwise dimension is transverse the lengthwise dimension of the anchor member **20** and then fitting the anchor head **22** through the cut-out section **12** such that the anchor head is located within the hollow interior of the swivel member **4** at the first end **8.** When the anchor head **22** is fit inside the swivel member **4** in this manner (and as depicted in the figures), the hemispherical contour of the anchor head **22** engages with the interior rounded first end **8** of the swivel member **4** in a manner similar to a ball-and-socket type joint. This engagement facilitates pivotal or swiveling movement of the swivel member **4** in a variety of positions in relation to the anchor member **20** while maintaining the coupling of the swivel and anchor members via the anchor head being trapped within the swivel member hollow interior.

The swivel member **4** further includes a threaded interior surface **10** within its hollow interior at a location proximate the upper or second end **6.** The threaded interior surface **10** provides a connection for an object to be hung from the swivel member (for example, via connection with a threaded connector having a diameter that matches the inner diameter dimension of the threaded interior surface) when the anchor member **20** is secured with a support member **50.** Threaded interior surface **10** may be stepped threaded so that surface **10** is replaced by multiple threads surfaces of different diameters with threads increasing in size from end **8** to end **6** enabling surface **10** to receive multiple size threaded connectors (e.g., threaded rods).

The hollow interior of the swivel member **4** is further suitably dimensioned to facilitate insertion of at least a portion of the tool **40** lengthwise into the hollow interior via the opening at the upper of second end **6** such that tool **40** can engage with the anchor head **22** during installation as described herein. The tool **40** has an elongated configuration including a lower or first end **44** and an upper or second end **42** that opposes the first end **44.** The tool **40** further has a main body portion **45** with a multi-faceted or shaped exterior periphery having a polygonal cross-section (for example, a hexagonal cross-section as shown in the figures). This facilitates a releasable (for example, friction-fit) connection of the tool **40** at its upper or second end **42** with a grip or handle member, such as a screw driver handle or powered tool such as a drill (not shown), that locks the tool in relation to the handle member or chuck such that rotational movements of the handle member are translated to the tool. However, it is noted that the external periphery of the tool can be of any suitable shape (for example, circular or rounded, polygonal, irregular, etc.) that facilitates a releasable coupling or complementary shaped connection between the tool and handle member or powered tool. The lower or first end **44** of the tool **40** can have a reduced cross-sectional dimension in relation to the tool main body portion **45** and further has a cross-sectional geometric shape that corresponds with the indentation **23** of the anchor head **22.** For example, the first end **44** can have a six pointed star-shaped configuration (as shown in the figures) to correspond with the six pointed star-shape configuration of the anchor head indentation **23.** Alternatively, the first end **44** can have any other suitable shape (e.g., the shape of a conventional screwdriver head, such as slotted, Phillips or cross-shaped, etc.) that corresponds with the shape of the anchor head indentation.

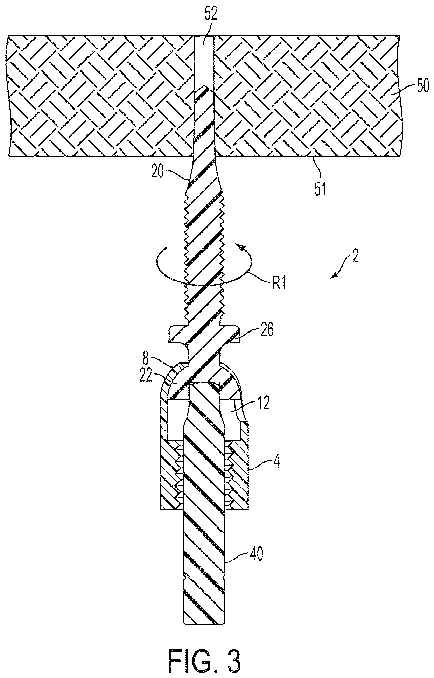

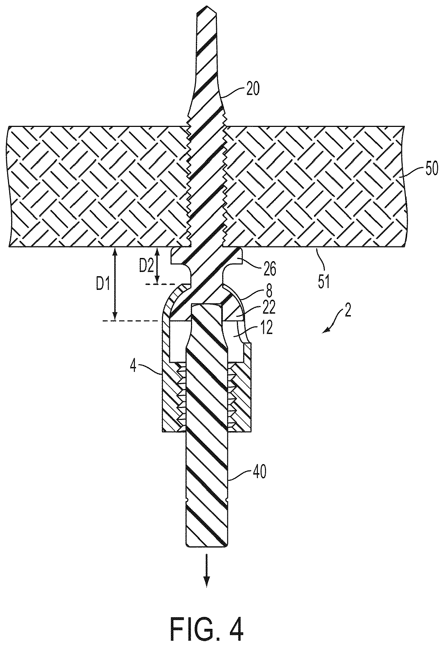

Installation of the swivel hanger system to secure the anchor and swivel members to a support member is now described with reference to FIGS. 1 - 4. Attachment of the swivel member **4** with the anchor member **20** to facilitate swivel movements of the swivel member about the anchor head **22** has been described herein. In addition, the tool **40** can be inserted at its second end **42** into a screw driver handle or other tool driving device (for example, in the bit holder of an electronic power drill). Referring to FIGS. 1 and 2, the tool **40** is inserted into the swivel member **4,** via the opening at the swivel member upper or second end **6,** when the swivel member **4** is aligned generally in the same or similar lengthwise direction as the anchor member **20.** The lower or first end **44** of the tool is engaged with the receptacle or indentation **23** at the anchor head **22.** Referring to FIG. 3, the lower or first end **24** of the anchor member **20** abuts against a surface **51** of the support member **50,** where the support member can be, for example, a side wall or top/ceiling wall of a room or other structure such as a steel beam. The tool **40** is rotated while force is applied to the anchor member **20** via the tool **40.** This causes rotation of the anchor member **20** (for example, in rotational direction **R1**) and movement of the anchor member into the bore **52.** Referring to FIG. 4, the anchor member **20** is prevented from further movement into the bore **52** when the flange end **26** of the main body portion **28** abuts the surface **51** of support member **50.**

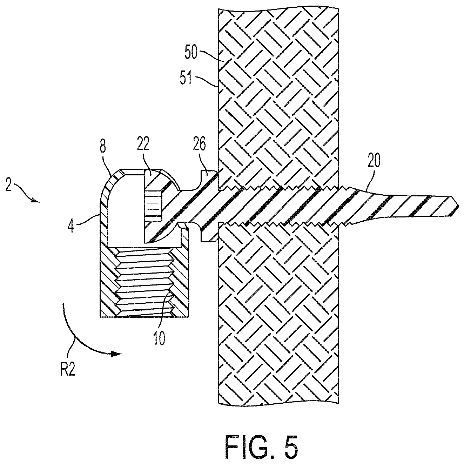

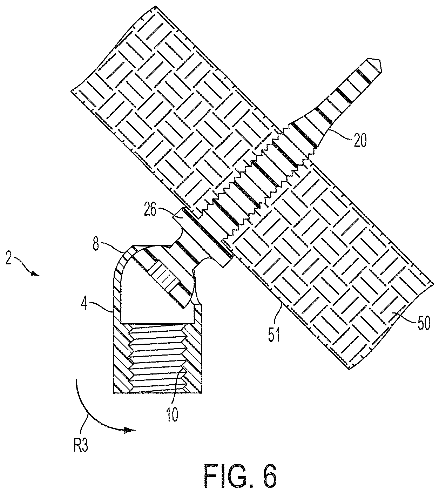

When the anchor member **20** is sufficiently secured within the bore **52** (for example, when the flange end **26** abuts support surface **51**), installation of the swivel hanger system is complete, and the tool **40** can be removed from the swivel member hollow interior (as shown by arrow **48** in FIG. 4). As can be seen in FIGS. 4-6, the swivel member **4** is free to rotate or swivel in various directions in relation to the anchor member **20** and support member **50** when the anchor member is secured with the support member, and this is possible regardless of how the support member is aligned in relation to a ground surface (for example, regardless of whether the support surface is a ceiling wall that is generally parallel with a ground surface as shown in FIG. 4, or a sidewall as shown in FIGS. 5 and 6 that is generally perpendicular or at some transverse alignment in relation to a ground surface). Examples showing how the swivel member **4** can achieve swivel movements in relation to the anchor member **20** are shown in FIG. 5 (see rotational arrow **R2**) and FIG. 6 (see rotational arrow **R3**).

As further shown in FIGS. 4 - 6, complete installation of the swivel hanger system (where the flange end **26** of the anchor member main body portion **28** abuts the surface **51** of the support member **50**) allows for free swivel movements of the swivel member **4** in relation to the anchor member **20** and support member **50** due to a slight gap or distance that separates the curved first end **8** of the swivel member **4** (which defines a portion of the ball of the ball-and-socket type swivel joint of the system 2) from the support member surface **51.** This is due to the structural features of the system **2,** namely the separation distance between the flange end **26** and the anchor head **22** of the anchor member **20.** This configuration provides a distance **D1** (defined as the distance between the flat upper surface of the anchor head **22** including the indentation **23** and the support surface **51**) that is sufficiently greater than a maximum distance **D2** (defined as the distance between the rounded first end **8** of the swivel member **4** and the support surface **51** when the swivel member **4** is generally aligned in the same lengthwise direction as the anchor member **20**). Since the anchor head **22** cannot be forced closer to the support surface **51** (due to the abutment between the flange end **26** and the support surface **51**), this provides a maximum insertion distance at which the anchor member **20** can be inserted into the support member **50** and also ensures a sufficient spacing (distance **D2**) is maintained that prevents pinching or restricted swivel movement of the swivel member **4** by either or both the anchor member **20** and the support surface **51.** Generally stated, the flange end **26** of the anchor member **20** provides a stop to prevent further insertion of the anchor member **20** into the support member bore **52** during installation, thus ensuring the sufficient spacing (distance **D2**) is always maintained.

An object can be supported by the swing hanger system **2** by connecting the object to the swivel member **4,** such that the object is suspended in the same general orientation from the support member **50** as the swivel member **4.** For example, an object (such as a potted plant, a decorative art structure, a shelving structure, or any other selected device or component) can include a threaded connector that secures (via threaded engagement) within the threaded interior surface **10** of the swivel member **4** to facilitate a suspended connection between the object and the support surface **50** via the swivel hanger system **2.**

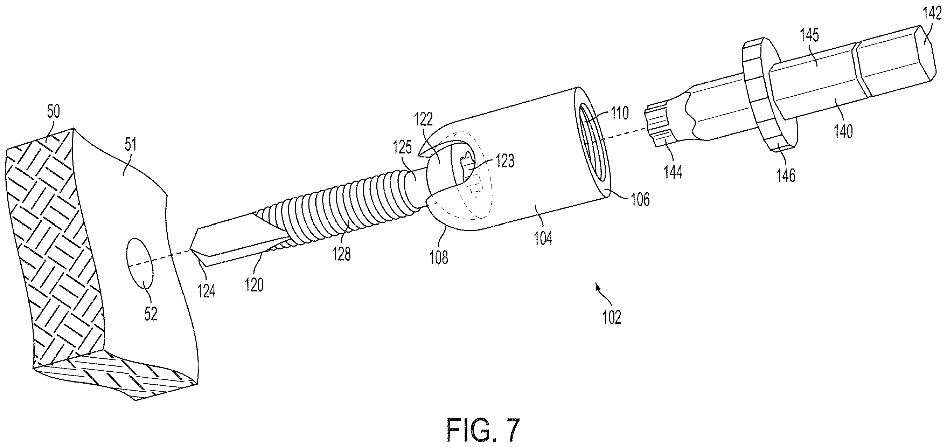

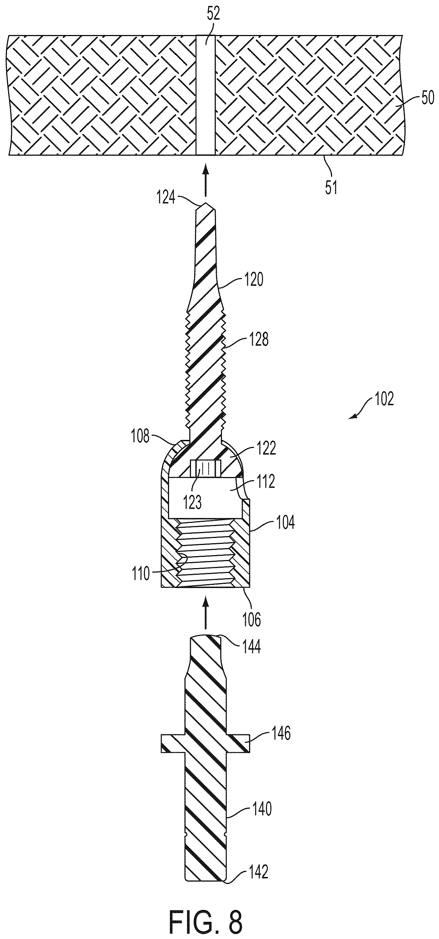

An alternative embodiment of a swivel hanger system **102** is depicted in FIGS. 7 -12. In this system **102,** the tool **140,** swivel member **104** and anchor member **120** are similar to those components described for the system **2** of FIGS. 1 - 6, with the exception that the anchor member **120** does not include a flange (which serves as a stop for insertion of the anchor member into the bore of a support member) at an end of the threaded main body portion **128.** Instead, a flange **146** is provided on the tool **140,** and (as described herein) this flange provides a stop to prevent insertion of the anchor member **120** beyond a certain distance within the support member **50.**

Referring to FIG. 7, swivel member **104** of system **102** has a substantially similar configuration as swivel member **4** of system **2,** including a flat, upper or second end 106 with an opening to a hollow interior and a rounded, lower or first end **108** also having an opening to the hollow interior and a slot or cut-out section **112** at the first end **108.** Anchor member **120** of system **102** also has a similar configuration as anchor member **20** of system **2,** including a threaded main body portion **128** that extends between a pillar member **125** and a pointed first end **124.** The anchor member **120** differs from anchor member **20** of system **2** in that anchor member **120** does not include any flange end for the main body portion **128.** Instead, the upper or second end of the main body portion **128** (i.e., the end that opposes first end **124**) extends to the pillar **125,** where the pillar **125** connects the upper/second end of the main body portion **128** and the anchor head **122.** The anchor head **122** is substantially similar to the anchor head **22** of system **2,** including a flat upper side with a patterned depression or indentation **123** (for example, in the shape of a six pointed star) and a hemispherical shaped underside that corresponds with the rounded first end **108** of the swivel member **104** (so as to form a ball-and-socket type joint when these components are coupled together as shown in the figures).

The tool **140** of system **102** is similar to tool **40** of system **2,** including a lower or first end **144,** an upper or second end **142,** and a main body portion **145** having a multi-faceted exterior periphery, where the first end **144** has a reduced cross-sectional dimension in relation to the tool main body portion **145** and further has a cross-sectional geometric shape that corresponds with the indentation **123** of the anchor head **122** (e.g., a six pointed star-shaped configuration). Tool **140** further includes a flange **146** that extends transversely from the main body portion **145** at a selected location from each of the ends **142, 144.** The size of the flange **146** is dimensioned such that its diameter or greatest width is larger than the opening at the upper or second end **106** of the swivel member **104.** Thus, when a portion of the tool **140** including the first end **144** is inserted through the opening at the second end **106** and into the hollow interior of the swivel member **104,** the tool **140** is prevented from being inserted further than the length of the tool from its first end **144** to the flange **146.** This is because the flange **146** abuts (and thus provides a stop at) the swivel member second end **106** during insertion of the tool **140** within the swivel member **104.** Since the swivel member **104** can move rotationally (i.e., in horizontal and/or vertical rotations, also referred to as swivel movements) as well as lengthwise or longitudinally to a certain extent along the main body portion **128** of the anchor member **120,** the first end **144** of the tool **140** can sufficiently engage with the indentation **123** of the anchor head **122** within the swivel member **104** during installation (in which a portion of the anchor member **120** is inserted within the bore **52** of the support surface **50**).

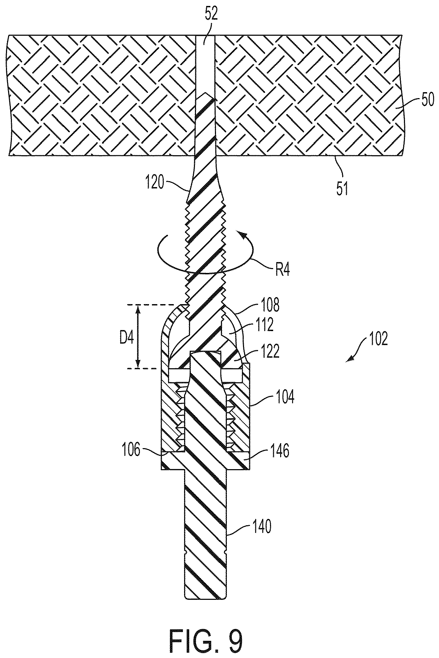

Installation of the system **102** is now described with reference to FIGS. 7 - 10. The coupling of the swivel member **104** and the anchor member **120** is achieved in a substantially similar manner as that previously described for system **2.** Referring to FIGS. 7 - 9, the swivel member **104** and anchor member **120** are aligned such that the lower or first end **144** of tool **140** can be inserted into the opening at the upper or second end **106** of the swivel member **104** so as to engage with the indentation **123** of anchor head **122.** As depicted in FIG. 9, during securing of the anchor member **120** within the support surface bore **52** (for example, by a rotating, screwing connection as indicated by rotational arrow **R4**), a spacing or gap distance **D4** is defined between the flat upper side of the anchor head **122** and the lower or first end **108** of the swivel member **104** (when the anchor member **120** and swivel member **104** are generally aligned in the same lengthwise direction). This gap distance **D4** allows for engagement of the tool first end **144** with the anchor head indentation **123** to facilitate transfer of linear and/or rotational forces from the tool **140** to the anchor member **120** (so as to insert the anchor member into the support surface bore **52**). Anchor insertion is initiated by abutting the lower or first end **124** of the anchor member **120** against the surface **51** of the support member **50** (for example, a side wall or top/ceiling wall of a room). The tool **140** is rotated while force is applied to the anchor member **20** via the tool **40** (due to engagement of the tool first end **144** with the anchor head indentation **123**). This causes rotation of the anchor member **120** (for example, in rotational direction **R4**) and movement of the anchor member into the bore **52.**

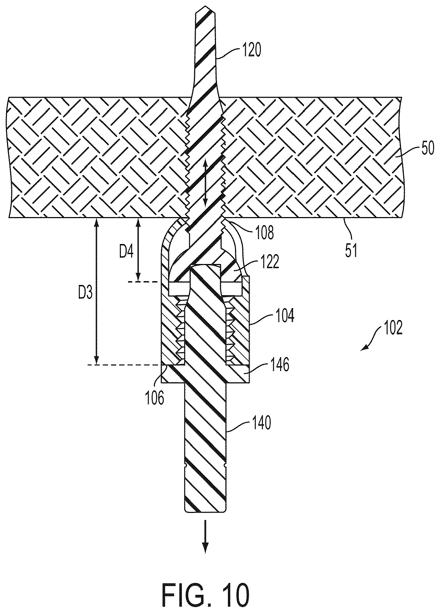

Referring to FIG. 10, the anchor member **120** has been inserted into the support surface bore **52** (via action of the tool **140**) to the point where first end **108** abuts support surface **51.** At this point in the insertion sequence, as discussed above, the tool **140** cannot move any further toward surface **51** due to the intervening swivel member **104.** However, because tool end **144** is still located in receptacle or head indentation **123,** rotation of tool **140** still advances anchor member **120** further into surface **51.** This advancement via tool **140** rotation will continue until anchor member **120** moves forward (into support surface **50**) enough that first end **144** is no longer engaged in head indentation **123** and can therefore no longer transfer rotational force to anchor member **120.**

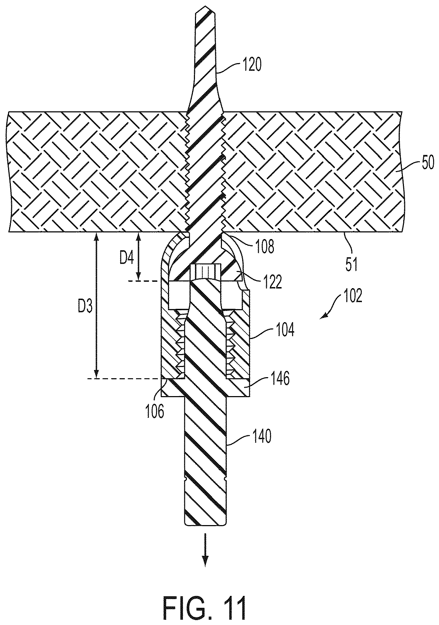

Referring to FIG. 11, the anchor member **120** has been inserted within the support surface bore **52** (via action of the tool **140**) to the furthest permissible extent (i.e., a maximum insertion distance of the anchor member has been reached) based upon the system configuration. In particular, at this final anchor member insertion state, the anchor member **120** is prevented from further movement into the bore **152** when the lower or first end **108** of the swivel member **104** engages the support surface **51.** This is because the tool **140** can no longer advance toward the support surface **51** to further drive the anchor member **120** into the bore **52** due to the abutment or stop engagement between the tool member flange **146** with the upper or second end **106** of the swivel member **104** in combination with the lower or first end **108** of the swivel member **104** engaging the support surface **51.** For a given fastener and tool **140** geometry, there is a distance **D4** below which swivel member **104** does not have sufficient space to freely pivot about anchor head **122.** Since the tool **140** cannot advance toward the support member **50** beyond the length of the swivel member **104** (indicated as distance **D3** in FIG. 10), this ensures that the minimum gap distance **D4** is maintained after installation so as to allow for free swivel movements of the swivel member **104** in relation to the anchor member **120** and the support member **50.** In other words the present systems limits the amount anchor member **120** can be driven into a support surface to ensure that there is sufficient gap between anchor head **122** and the support surface so that end **108** of swivel member has sufficient space to swivel without obstruction. Furthermore, the present system allows for this over tightening prevention system to be achieved without a stop structure such as flange end **26** on anchor member **20.**

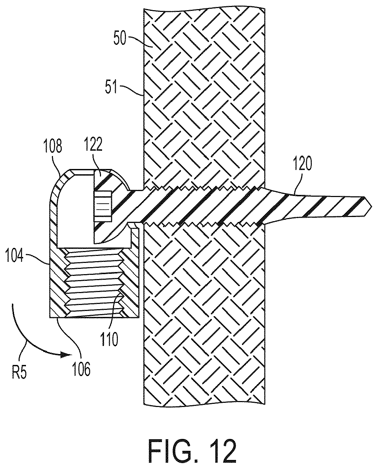

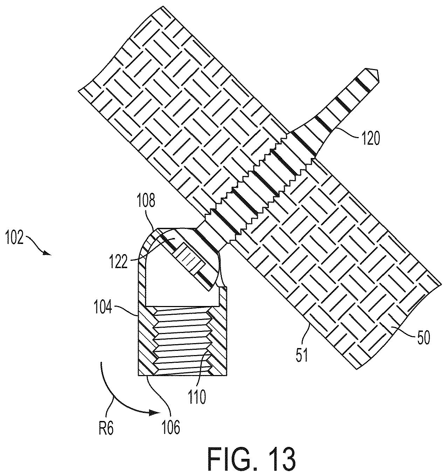

As indicated in FIGS. 11 - 13, the swivel member **104** can rotate at a variety of different orientations in relation to the anchor member **120** and support surface **51** (as indicated by rotation arrows **R5** and **R6** in FIGS. 11 and 12). An object can be supported by the swivel system **102** via connection between a threaded connector of the object and the threaded interior surface **110** at the upper or second end **106** of the swivel member **104.**

Thus, the swivel hanger system facilitates an easy connection to a support member with a built-in stop mechanism that prevents securing of the anchor member too far within the support member. This in turn ensures free swivel movements (i.e., horizontal and/or vertical rotational movements) of the swivel member in relation to the anchor member and support member after installation.

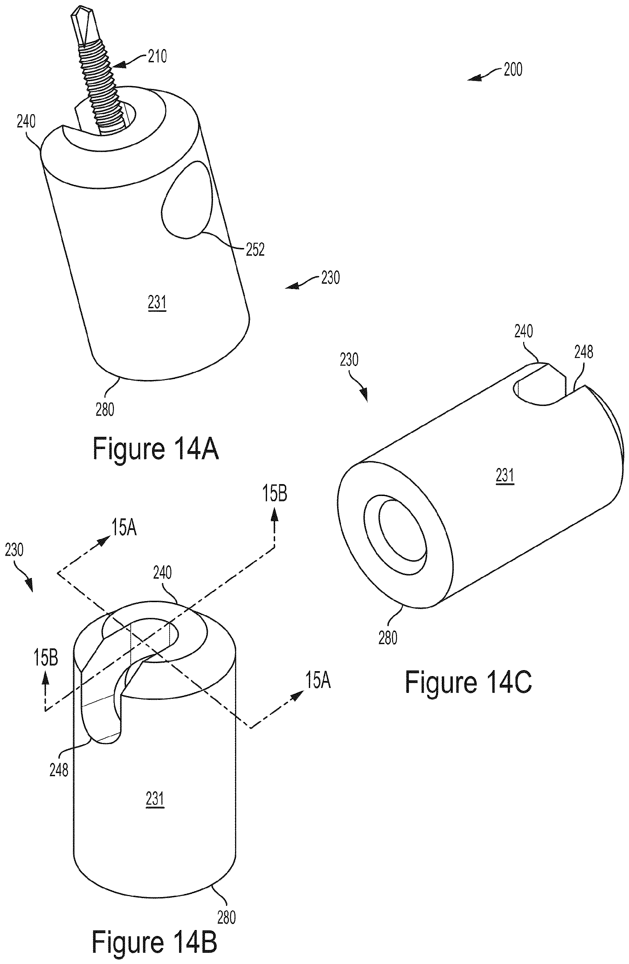

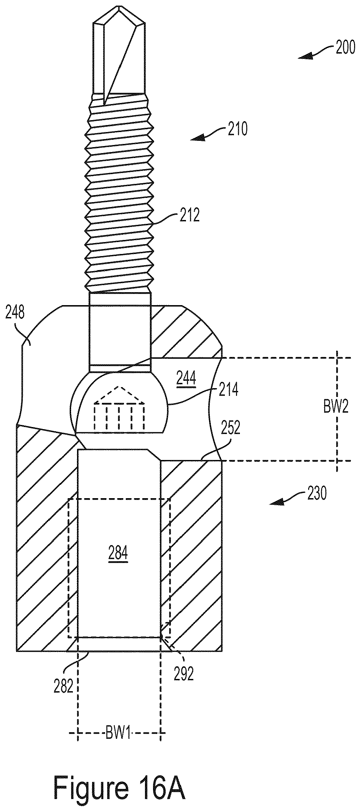

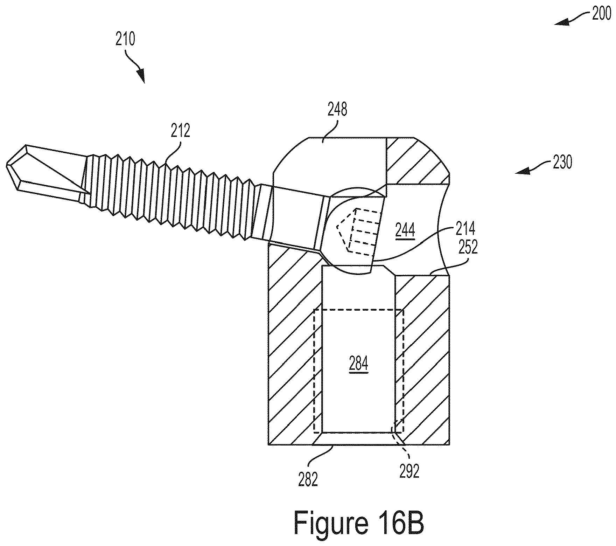

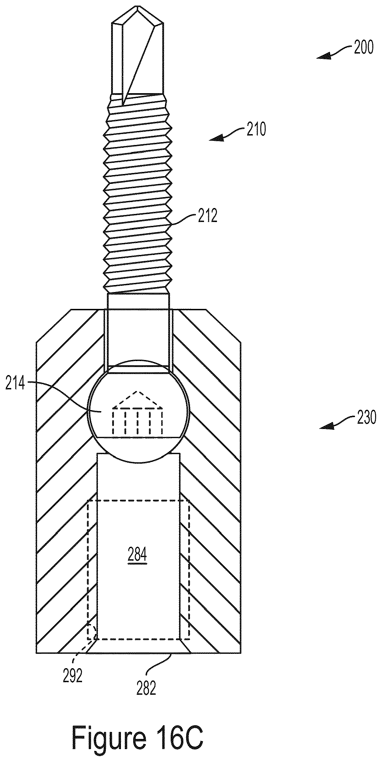

Another alternative embodiment of a swivel hanger system **102** is depicted in FIGS. 14 - 17. In this embodiment, the system 200 includes an anchor member 210 and a swivel hanger 230. Anchor member 210 includes a threaded portion 212 of a first diameter and a head portion 214 of a second larger diameter than the first threaded portion diameter. Head portion 214 may include generally spherical shape defining at least a portion of the head portion. Swivel hanger 230 includes a first end 240 and a second end 280. Extending between first and second ends 240, 280 is a generally cylindrical wall 231. The swivel hanger first end 240 may be rounded and include an opening 248. The opening 248 may be a slotted opening and/or may be elongate as long as the slot facilitates pivoting of the anchor and prevents escape of head portion 214. The second end 280 of swivel hanger 230 includes a receptacle or opening 282 having a locking member 292 (e.g., male or female threads or any other connector) for attachment to an external member (e.g., a threaded rod; not shown). That receptacle 282 may lead to a through passage 284 that communicates with the slotted opening 248 at the first rounded end of swivel hanger 248. An anchor member 210 may be coupled with swivel hanger 230 by passing a first end of anchor member 210 through second end 280 of swivel hanger 230, then through passage 284 until the anchor member extends from slotted opening 248 and head 214 is pivotably trapped at the inner rounded (e.g., spherically rounded) surface of head portion 214 of swivel member 230.

In addition to opening 282 in the first end 240 of swivel member 230, a rear access opening 252 may also be disposed in wall 231. Rear access opening 252 can be positioned at or toward a first end 240 of swivel hanger in wall 231 opposite to and in line with slotted opening 248. Slotted opening 248 and rear access opening 252 may then communicate with each other via head space 244. Head space 244 may take the form of a generally spherical space for complementarily accommodating a generally spherical head of anchor member 210. When space 244 has a spherical shape, the shape is defined by generally spherical interior surface walls of a first end 240 of the swivel member. The rear access opening 252 being opposite to or in line with slotted opening 248, an anchor member 210 may be coupled with swivel member 230 via rear access opening 252. Specifically, a first end of an anchor 210 may be inserted into rear access opening 252, through head space 244 and then through slotted opening 248 until head 214 of anchor member 230 is received and pivotably trapped in head space 244.

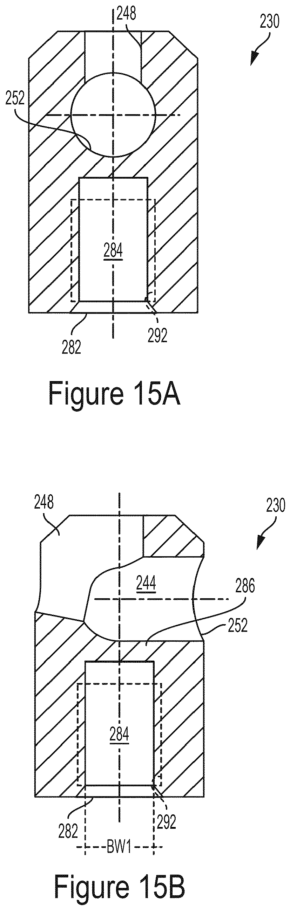

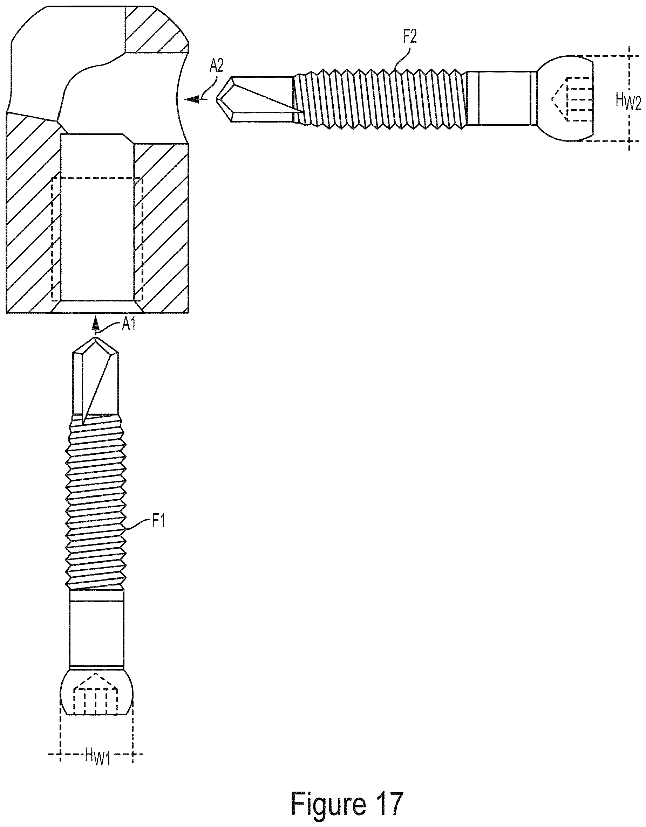

Therefore, as shown in FIG. 17, there are two ways to couple an anchor member 210 to a swivel member 230 (i.e., insertion through the second end 280 of swivel member 230 and insertion through rear access opening 252. The embodiment of FIG. 17 may accommodate both insertion options. Specifically, a first fastener F1 is shown positioned to be inserted into opening 282 of second end 240 of swivel hanger 230 in a direction A1 while a second, alternate fastener F2 is shown positioned to be inserted into rear access opening 252 in the direction of A2. In the embodiment of FIG. 15, a stop 286 prevents an anchor member 210 from being inserted through opening 282. Here, only insertion through rear access opening 252 is possible and passage 284 accommodates a support or suspension member such as a threaded rod.

For the following reasons, insertion of anchor member F2 may be preferred over an F1 insertion via opening 282. When an anchor member (e.g., F1) is coupled to a swivel member 230 via passage 284, the minimum size of the innermost threads 292 is limited by the head width HW1 of the anchor member. In other words, the inner diameter of threads 292 has to be larger than the outer diameter HW1 of the head of F1. Therefore, if the system design calls for an anchor head of diameter X, threads 292 have to be larger than X to accommodate the head. It would be advantageous if the minimum diameter BW1 of the thread 292 wasn't dependent on the size of the anchor head HW1 needing to pass through passage 284. One advantage of coupling an anchor member 210 to a swivel member 230 via rear access opening 252 is that the minimum diameter of threads 292 are not limited by the size of the anchor member head being utilized in the system. Since the inner diameter of threads 292 can be smaller than the diameter BW2 of anchor member F2 which is coupled to the swivel hanger 230 by passing fastener F2 through a relatively larger rear access opening 252 than through the smaller diameter of passage 284. Therefore, the size of the thread 292 is completely independent of the diameter HW2 of the head of anchor member F2 which passes through rear access opening 252 and not passage 284.

Features of the embodiments of Figs. 1 and 7 may also be incorporated in the embodiment of FIGS. 14-17. For example, a stop on the driving tool and/or a stop on the anchor member may be incorporated into the embodiments of FIGS. 14-17.

It will be appreciated that whilst various aspects and embodiments of the present invention have heretofore been described, the scope of the present invention is not limited to the embodiments set out herein and instead extends to encompass all arrangements, and modifications and alterations thereto, which fall within the scope of the appended claims. Additionally it is to be understood that terms such as "top", "bottom", "front", "rear", "side", "height", "length", "width", "upper", "lower", "interior", "exterior", and the like as may be used herein, merely describe points of reference and do not limit the present invention to any particular orientation or configuration.

## Claims

1. A swivel hanger system (200) comprising:
an anchor member (210) comprising a first end and a second end, an anchor head (214) disposed at the second end of the anchor member and an elongated body disposed between the first and second ends of the anchor member, the anchor head including a shaped receptacle capable of accommodating a driver, wherein the first end and at least a portion of the elongated body are configured to be inserted into a support member when the system is connected with the support member;
a swivel member (230) including a first end (240) and a second end (280), a wall (231) extending between the first end and the second end, the first end including a first opening (248) and the first end also including an oppositely positioned second opening (252) in the wall, the first opening communicating with the second opening via a head space (244) defining a hollow interior of the swivel member, and the head space being configured to rotatably couple with the anchor head such that the anchor head is located within the hollow interior, the second end further including a locking opening (282) and the locking opening including a locking member (292), the locking member adapted to lockingly accommodate an elongate member;
the first end of the anchor member being inserted into the second opening and then through the first opening until the head is received in the headspace, the elongate body extending from the first opening and swivelable within the first opening.

2. The swivel hanger system of claim 1, wherein the anchor member includes a stop structure and the stop structure includes a flange disposed between the anchor member first and second ends, the flange limiting insertion of the anchor member into the support member.

3. The swivel hanger system of claim 1, further comprising:
a tool that is configured to insert the anchor member into the support member.

4. The swivel hanger system of claim 3, wherein the tool is configured to extend into the swivel member hollow interior via the swivel member second end opening so as to engage an end of the tool with the anchor head.

5. The swivel hanger system of claim 4, wherein the anchor head includes a surface having a patterned indentation, and the tool end includes a patterned exterior surface that corresponds with the patterned indentation.

6. The swivel hanger system of claim 4, wherein the stop structure comprises the second end of the swivel member and a flange located along a main body portion and between a first end and a second end of the tool, and the flange is suitably dimensioned to abut the swivel member second end when a portion of the tool including the tool first end is inserted within the swivel member hollow interior.

7. The swivel hanger system of claim 6, wherein the stop structure further limits insertion of the anchor member into the support structure.

8. The swivel hanger system of claim 3, wherein the anchor head includes engaging structure that engages with the tool to facilitate rotation of the anchor member via a threaded screw engagement into the support member.

9. The swivel hanger system of claim 1, wherein the swivel member includes a cut-out section located at the rounded first end of the swivel member and that extends to the opening at the rounded first end, and the anchor head is suitably dimensioned to be inserted into the swivel member hollow interior via the cut-out section and the rounded first end opening.

10. The swivel hanger system of claim 1, wherein the hollow interior includes a threaded interior surface that extends proximate the second end opening of the swivel member so as to facilitate attachment of an object to the swivel member during system use.

11. The swivel hanger system of claim 1, wherein the anchor head has a hemispherical shape that corresponds with the rounded first end of the swivel member such that coupling of the rounded first end facilitates swivel movements of the swivel member in relation to the anchor head.

## Patentansprüche

1. Drehlageraufhängesystem (200), umfassend:
ein Ankerelement (210), das ein erstes Ende und ein zweites Ende, einen Ankerkopf (214), der an dem zweiten Ende des Ankerelements angeordnet ist, und einen länglichen Körper, der zwischen dem ersten und zweiten Ende des Ankerelements angeordnet ist, umfasst, wobei der Ankerkopf einen geformten Behälter umfasst, der imstande ist einen Schrauber aufzunehmen, wobei das erste Ende und mindestens ein Abschnitt des länglichen Körpers konfiguriert sind, in ein Stützelement eingesetzt zu werden, wenn das System mit dem Stützelement verbunden ist;
ein Drehlagerelement (230), das ein erstes Ende (240) und ein zweites Ende (280), eine Wand (231), die sich zwischen dem ersten Ende und dem zweiten Ende erstreckt, beinhaltet, wobei das erste Ende eine erste Öffnung (248) beinhaltet und das erste Ende auch eine gegenüber positionierte zweite Öffnung (252) in der Wand beinhaltet, die erste Öffnung über einen Kopfraum (244), der ein hohles Inneres des Drehlagerelements definiert, mit der zweiten Öffnung verbunden ist und der Kopfraum konfiguriert ist, sich drehbar mit dem Ankerkopf zu koppeln, sodass der Ankerkopf innerhalb des hohlen Inneren liegt, wobei das zweite Ende weiter eine Verriegelungsöffnung (282) beinhaltet und die Verriegelungsöffnung ein Verriegelungselement (292) beinhaltet, wobei das Verriegelungselement angepasst ist, ein längliches Element verriegelnd aufzunehmen;
wobei das erste Ende des Ankerelements in die zweite Öffnung und dann durch die erste Öffnung eingesetzt wird, bis der Kopf in dem Kopfraum aufgenommen ist, wobei der längliche Körper sich von der ersten Öffnung und schwenkbar innerhalb der ersten Öffnung erstreckt.

2. Drehlageraufhängesystem nach Anspruch 1, wobei das Ankerelement eine Stoppstruktur beinhaltet und die Stoppstruktur einen Flansch beinhaltet, der zwischen dem ersten und zweiten Ende des Ankerelements angeordnet ist, wobei der Flansch einen Einsatz des Ankerelements in das Stützelement begrenzt.

3. Drehlageraufhängesystem nach Anspruch 1, weiter umfassend:
ein Werkzeug, das konfiguriert ist, das Ankerelement in das Stützelement einzusetzen.

4. Drehlageraufhängesystem nach Anspruch 3, wobei das Werkzeug konfiguriert ist, sich über die zweite Endöffnung des Drehlagerelements in das hohle Innere des Drehlagerelements zu erstrecken, um mit einem Ende des Werkzeugs mit dem Ankerkopf einzugreifen.

5. Drehlageraufhängesystem nach Anspruch 4, wobei der Ankerkopf eine Oberfläche beinhaltet, die eine strukturierte Vertiefung aufweist und das Werkzeugende eine strukturierte Außenoberfläche beinhaltet, die der strukturierten Vertiefung entspricht.

6. Drehlageraufhängesystem nach Anspruch 4, wobei die Stoppstruktur das zweite Ende des Drehlagerelements und einen Flansch, der entlang eines Hauptkörperabschnitts und zwischen einem ersten Ende und einem zweiten Ende des Werkzeugs liegt, umfasst und der Flansch geeignet bemessen ist, um an dem zweiten Ende des Drehlagerelements anzuliegen, wenn ein Abschnitt des Werkzeugs, der das erste Ende des Werkzeugs beinhaltet, innerhalb des hohlen Inneren des Drehlagerelements eingesetzt ist.

7. Drehlageraufhängesystem nach Anspruch 6, wobei die Stoppstruktur weiter Einsatz des Ankerelements in die Stützstruktur begrenzt.

8. Drehlageraufhängesystem nach Anspruch 3, wobei der Ankerkopf eine Eingriffsstruktur beinhaltet, die mit dem Werkzeug eingreift, um Drehung des Ankerelements mittels eines Gewindeschraubeneingriffs in das Stützelement zu erleichtern.

9. Drehlageraufhängesystem nach Anspruch 1, wobei das Drehlagerelement einen ausgeschnittenen Bereich beinhaltet, der bei dem abgerundeten ersten Ende des Drehlagerelements liegt und der sich zu der Öffnung bei dem abgerundeten ersten Ende erstreckt, und der Ankerkopf geeignet bemessen ist, in das hohle Innere des Drehlagerelements über den ausgeschnittenen Bereich und die abgerundete erste Endöffnung eingesetzt zu werden.

10. Drehlageraufhängesystem nach Anspruch 1, wobei das hohle Innere eine Innenoberfläche mit Gewinde umfasst, die sich nahe der zweiten Endöffnung des Drehlagerelements erstreckt, um Befestigung eines Objekts an das Drehlagerelement während einer Systemnutzung zu erleichtern.

11. Drehlageraufhängesystem nach Anspruch 1, wobei der Ankerkopf eine Halbkugelform aufweist, die dem abgerundeten ersten Ende des Drehlagerelements entspricht, sodass Kopplung des abgerundeten ersten Endes Schwenkbewegungen des Drehlagerelements in Bezug auf den Ankerkopf erleichtert.

## Revendications

1. Système de suspension pivotant (200) comprenant :
un élément d'ancrage (210) comprenant une première extrémité et une seconde extrémité, une tête d'ancrage (214) disposée au niveau de la seconde extrémité de l'élément d'ancrage et un corps allongé disposé entre la première et la seconde extrémité de l'élément d'ancrage, la tête d'ancrage incluant un réceptacle façonné capable de loger un pilote, dans lequel la première extrémité et au moins une partie du corps allongé sont configurées pour être insérées à l'intérieur d'un élément de support lorsque le système est raccordé à l'élément de support ;
un élément pivotant (230) incluant une première extrémité (240) et une seconde extrémité (280), une paroi (231) s'étendant entre la première extrémité et la seconde extrémité, la première extrémité incluant une première ouverture (248) et la première extrémité incluant également une seconde ouverture (252) positionnée de manière opposée dans la paroi, la première ouverture communicant avec la seconde ouverture via un espace de tête (244) définissant un intérieur creux de l'élément pivotant, et l'espace de tête étant configuré pour se coupler en rotation avec la tête d'ancrage de sorte que la tête d'ancrage est située au sein de l'intérieur creux, la seconde extrémité incluant en outre une ouverture de verrouillage (282) et l'ouverture de verrouillage incluant un élément de verrouillage (292), l'élément de verrouillage adapté pour loger de manière encliquetée un élément allongé ;
la première extrémité de l'élément d'ancrage étant insérée à l'intérieur de la seconde ouverture, et ensuite à travers la première ouverture jusqu'à ce que la tête soit reçue dans l'espace de tête, le corps allongé s'étendant à partir de la première ouverture et pouvant pivoter au sein de la première ouverture.

2. Système de suspension pivotant de la revendication 1, dans lequel l'élément d'ancrage inclut une structure de butée et la structure de butée inclut une bride disposée entre les première et seconde extrémités de l'élément d'ancrage, la bride limitant l'insertion de l'élément d'ancrage à l'intérieur de l'élément de support.

3. Système de suspension pivotant selon la revendication 1, comprenant en outre :
un outil qui est configuré pour insérer l'élément d'ancrage à l'intérieur de l'élément de support.

4. Système de suspension pivotant selon la revendication 3, dans lequel l'outil est configuré pour s'étendre à l'intérieur de l'intérieur creux d'élément pivotant via l'ouverture de seconde extrémité d'élément pivotant afin d'engager une extrémité de l'outil avec la tête d'ancrage.

5. Système de suspension pivotant selon la revendication 4, dans lequel la tête d'ancrage inclut une surface présentant une indentation à motif, et l'extrémité d'outil inclut une surface externe à motif qui correspond à l'indentation à motif.

6. Système de suspension pivotant selon la revendication 4, dans lequel la structure de butée comprend la seconde extrémité de l'élément pivotant et une bride située le long d'une partie de corps principal et entre une première extrémité et une seconde extrémité de l'outil, et la bride est dimensionnée de manière appropriée pour jouxter la seconde extrémité d'élément pivotant lorsqu'une partie de l'outil incluant la première extrémité d'outil est insérée au sein de l'intérieur creux d'élément pivotant.

7. Système de suspension pivotant selon la revendication 6, dans lequel la structure de butée limite en outre l'insertion de l'élément d'ancrage à l'intérieur de la structure de support.

8. Système de suspension pivotant selon la revendication 3, dans lequel la tête d'ancrage inclut une structure d'engagement qui s'engage avec l'outil pour faciliter la rotation de l'élément d'ancrage via un engagement de vis filetée à l'intérieur de l'élément de support.

9. Système de suspension pivotant selon la revendication 1, dans lequel l'élément pivotant inclut une section découpée située au niveau de la première extrémité arrondie de l'élément pivotant et qui s'étend jusqu'à l'ouverture au niveau de la première extrémité arrondie, et la tête d'ancrage est correctement dimensionnée pour être insérée à l'intérieur de l'intérieur creux d'élément pivotant via la section découpée et l'ouverture de première extrémité arrondie.

10. Système de suspension pivotant selon la revendication 1, dans lequel l'intérieur creux inclut une surface intérieure filetée qui s'étend à proximité de l'ouverture de seconde extrémité de l'élément pivotant afin de faciliter l'attachement d'un objet à l'élément pivotant pendant l'utilisation du système.

11. Système de suspension pivotant selon la revendication 1, dans lequel la tête d'ancrage présente une forme hémisphérique qui correspond à la première extrémité arrondie de l'élément pivotant de sorte que le couplage de la première extrémité arrondie facilite les mouvements de pivotement de l'élément pivotant par rapport à la tête d'ancrage.
